# EUROPÄISCHE PATENTANMELDUNG

(11) **EP 2 372 095 A1**
(43) Veröffentlichungstag der Anmeldung: **05.10.2011**
(21) Anmeldenummer: 10003289.5
(22) Anmeldetag: 26.03.2010
(51) Int. Cl.: F01D 5/26, F01D 5/30, F01D 25/06, F04D 29/32, F16B 1/00

(54) **Verfahren und Vorrichtung zur Befestigung einer Schaufel am Rotor mittels Formgedächtniswerkstoff**

(71) Anmelder: Siemens Aktiengesellschaft, 80333 München (DE)
(72) Erfinder: Barnikel, Jochen, Dr., 45470 Mülheim an der Ruhr (DE); Gollerthan, Susanne, Dr., 44575 Castrop-Rauxel (DE)

(57) **Zusammenfassung**

Die Erfindung betrifft ein Verfahren zur Reduzierung von Schwingungen in einem ersten Bauteil und einem zweiten Bauteil, wobei zwischen dem ersten und dem zweiten Bauteil ein Formgedächtniswerkstoff angeordnet wird, wobei der Formgedächtniswerkstoff in einem martensitischen Zustand abgekühlt und verformt wird und anschließend zwischen dem ersten und dem zweiten Bauteil eingebaut wird und durch eine Erwärmung in den austenitischen Zustand umgewandelt wird.

## Beschreibung

Die Erfindung betrifft ein Verfahren zur Reduzierung von Schwingungen in einem ersten Bauteil und einem zweiten Bauteil, wobei zwischen dem ersten und dem zweiten Bauteil ein Formgedächtniswerkstoff (FGW) angeordnet wird.

Des Weiteren betrifft die Erfindung eine Vorrichtung, die einen Formgedächtniswerkstoff aufweist.

Solch ein erstes und zweites Bauteil wird beispielsweise in Strömungsmaschinen eingesetzt. Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt, einem Fluid Energie zuzuführen, um dessen Druck zu erhöhen.

In einer Strömungsmaschine erfolgt die Energieumsetzung indirekt und nimmt den Weg über die kinetische Energie des Strömungsmediums. In einer Turbine beispielsweise strömt das Strömungsmedium durch feststehende Leitschaufeln, wobei sich die Geschwindigkeit und damit die kinetische Energie des Strömungsmediums auf Kosten seines Drucks erhöht. Durch die Form der Leitschaufeln entsteht eine Geschwindigkeitskomponente in der Umfangsrichtung des Laufrades. Das Fluid bzw. Strömungsmedium gibt seine kinetische Energie an den Rotor ab, indem der Betrag der Geschwindigkeit und die Richtung beim Durchströmen der von den Laufschaufeln gebildeten Kanälen verändert wird. Das Laufrad wird durch die dabei entstehenden Kräfte angetrieben.

Die rotierenden Schaufeln in einer Strömungsmaschine sind für möglichst große Betriebsbedingungen resonanzfrei ausgelegt. Wenn sich die Betriebsbedingungen ändern, z. B. durch Volumenstromänderungen, können die Schaufeln zu Schwingungen angeregt werden, was zu einem Versagen der Schaufeln führen könnte, wenn Schwingungsresonanzen zu zu hohen mechanischen Beanspruchungen führen. Es sind verschiedene Einrichtungen entwickelt worden, um diese Schwingungen zu dämpfen.

Die Schwingungen der Schaufeln sind unerwünscht, da sie zu Materialermüdung der Schaufel und der Rotorklaue führen können.

Strömungsmaschinen mit Schaufelanordnungen zur Wechselwirkung mit einer durch die Strömungsmaschine strömenden Fluidströmung sind grundsätzlich als Verdichter, Turbinen oder dergleichen bekannt. Um einen hohen Wirkungsgrad einer solchen Maschine erreichen zu können, werden zunehmend höhere physikalische Anforderungen an die verwendeten Materialien der Strömungsmaschine sowie deren Verarbeitung gestellt. So sind beispielsweise Betriebstemperatur und Betriebsdruck im Strömungskanal zur Verbesserung des Wirkungsgrads regelmäßig erhöht worden. Dies macht es erforderlich, Schaufeln aus einem besonders widerstandsfähigen Material herzustellen, wozu heute sowohl Stähle, beispielsweise hochlegierte Chromstähle, als auch keramische Werkstoffe verwendet werden. Ein Augenmerk ist dabei auf die Festlegung der Schaufeln im Strömungskanal zu richten, da diese nicht nur über einen großen Temperaturbereich, sondern auch über einen großen Betriebsdruckbereich sicher in ihrer Position festgelegt sein müssen. Zusätzliche Beanspruchungen entstehen im bestimmungsgemäßen Betrieb an den auf der Rotorwelle angeordneten Laufschaufeln, beispielsweise Zentrifugalkräften, Vibrationen und dergleichen. Der Befestigung der Schaufeln an der Rotorwelle bzw. an der Wand des Strömungskanals ist daher eine besondere Aufmerksamkeit zu widmen.

Im Stand der Technik ist es bisher üblich, eine Verbindungskontur der Schaufeln als Schaufelfuß auszugestalten, welcher in eine entsprechend geformte Ausnehmung in der Rotorwelle bzw. an der Wand des Strömungskanals eingefügt wird. Hierdurch ist die Schaufel in ihrer Position festgelegt. Die Ausnehmung kann sowohl als Bohrung als auch als Nut, beispielsweise in Längsrichtung des Strömungskanals oder auch umlaufend ausgebildet sein, wobei vorzugsweise eine profilierte Kontur vorgesehen ist.

Oftmals ist die Verbindungskontur des Schaufelfußes stufig ausgebildet, wodurch ein überbestimmtes System entsteht. Aber auch andere Konturen, beispielsweise kontinuierliche große Flächen, gekrümmte Flächen oder dergleichen, die bei der Befestigung von Schaufeln verwendet werden, führen zu einer überbestimmten Festlegung. Es ist daher ein besonderes Augenmerk auf die Herstellung bezüglich der Toleranzen zu richten. Im Stand der Technik werden Spalte aufgrund von Fertigungstoleranzen, welche in einer Größenordnung von wenigen Hundertstel-Millimeter beim Stillstand der Strömungsmaschine liegen können, in Kauf genommen, wodurch die optimale Kraftübertragung jedoch nicht erreicht wird. Bei hoher Last ist die Verbindung derart ausgelegt, dass sich die Spalte zunehmend schließen. Dies ist jedoch für die Kraftübertragung zwischen Schaufel und Rotorwelle oder Strömungskanalwand nicht optimal. Wünschenswert wäre ein gleichmäßiges Anliegen aller der gesamten Tragflächen der Verbindungskontur der Schaufel.

Zur Verbesserung dieser Situation wird im Stand der Technik vorgeschlagen, auf der Verbindungskontur an den Tragflanken Materialausformungen vorzusehen, die sich beim ersten Betrieb der Strömungsmaschine abflachen und damit die Spalte reduzieren sollen. Gleichwohl werden Kavitäten gebildet, die sich hinsichtlich ihrer Wirkung vergleichbar nachteilig wie die Spalte verhalten. Als nachteilig erweist es sich ferner, dass das Fügen der Verbindungskontur der Schaufel, welche die Ausformungen trägt, in die zugehörige Öffnung durch die Ausformungen erschwert wird, insbesondere wenn ein vorhandenes Toleranzschema beibehalten werden soll. Darüber hinaus besteht die Gefahr, dass beim Fügen die Ausformungen abgeschert werden und die gewünschte Wirkung nicht erreicht wird. Weiterhin erweist sich das Anbringen der Ausformungen an den Tragflanken als kostenaufwändig.

Zur hinreichenden Lagerung, insbesondere der Laufschaufeln in dem Rotor, ist es bekannt, den Schaufelfuß der Laufschaufel tannenförmig als sogenannten Tannenfuß auszugestalten, wobei weitere Verbindungsformen wie der Schwalbenschwanz- oder Hammerkopffuß bekannt sind. Die dazu korrespondierend ausgestaltete Aufnahme in dem Lagerelement bzw. in dem Rotor ist entsprechend der Ausgestaltung des Tannenfußes ausgeführt. Selbstverständlich weist die Strömungsmaschine nicht nur eine Laufschaufel und eine Leitschaufel auf, sondern eine Vielzahl hiervon, so dass ein Schaufelgitter gebildet ist, durch das ein Medium strömt.

Wünschenswert wäre es, die Schaufelbefestigung derart weiterzubilden, dass schädigende Schwingungen wirksam reduziert werden.

An dieser Stelle setzt die Erfindung an, deren Aufgabe es ist, ein Verfahren zur Reduzierung von Schwingungen in einem ersten Bauteil und einem zweiten Bauteil anzugeben.

Gelöst wird diese Aufgabe durch ein Verfahren zur Reduzierung von Schwingungen in einem ersten Bauteil und einem zweiten Bauteil, wobei zwischen dem ersten und dem zweiten Bauteil ein Formgedächtniswerkstoff (FGW) angeordnet wird, wobei der in einem Ausgangszustand vorliegende FGW in einen martensitischen Zustand abgekühlt und verformt wird, wobei der verformte FGW zwischen dem ersten und dem zweiten Bauteil eingebaut wird und anschließend der FGW in einen austenitischen Zustand umgewandelt wird.

Vorteilhafte Weiterbildungen sind in den Unteransprüchen angegeben.

Die Erfindung geht von dem Aspekt aus, dass ein Formgedächtniswerkstoff (FGW) zwischen dem ersten und dem zweiten Bauteil angeordnet werden kann und dieser Werkstoff zur Schwingungsreduzierung ausgebildet ist.

Formgedächtniswerkstoffe sind an sich bekannt und verfügen über ein besonderes mechanisches Verhalten, was zudem von der Temperatur stark abhängig ist. Innerhalb eines gewissen Bereichs weisen solche Werkstoffe die Fähigkeit auf, durch äußere Kräfte hervorgerufene Verformungen wieder in ihre alte Gestalt zurückzukehren, was als Formgedächtnis-Eigenschaft bezeichnet wird.

Solche Effekte zeigen beispielsweise folgende Formgedächtnis-Legierungen: Die Systeme Nickel-Titan (NiTi), Kupfer-Zink-Aluminium (CuZnAl), Kupfer-Aluminium-Nickel (CuAlNi) sowie Legierungen auf Eisenbasis.

Die Grundlage des Formgedächtnis-Effektes ist eine martensitische Phasenumwandlung, die durch eine Temperaturänderung oder durch das Aufbringen einer kritischen äußeren Kraft ausgelöst werden kann. Unter dem Begriff Formgedächtnis-Effekt wird zwischen den folgenden Effekten unterschieden: Ein-Weg-Effekt, Zwei-Weg-Effekt und die Pseudoelastizität. Je nach dem, wie die chemische Zusammensetzung des Gefüges und die thermomechanische Vorgeschichte des Werkstoffs ist, zeigt dieser Werkstoff einen der vorgenannten Effekte.

Es kann auch in einigen Formgedächtnis-Legierungen in Abhängigkeit von der Temperatur und einer äußeren angelegten Spannung ein zusätzlicher Dehnungsbeitrag auftreten, der als pseudoelastische oder pseudoplastische Dehnung bekannt ist.

Die Erfindung geht des Weiteren von dem Aspekt aus, dass der Formgedächtniswerkstoff zwischen dem ersten und dem zweiten Bauteil eingebaut wird, wobei die Abmessungen und geometrischen Verhältnisse zwischen dem ersten und zweiten Bauteil sowie dem Formgedächtniswerkstoff derart sind, dass eine Kraft von dem Formgedächtniswerkstoff auf das erste und zweite Bauteil ausgeübt wird. Das erste und zweite Bauteil müssen daher derart geformt sein, dass eine Gegenkraft entsteht, die letztendlich dazu führt, dass das Gebilde aus dem ersten und dem zweiten Bauteil und dem Formgedächtniswerkstoff kompakt ausgebildet ist.

Die Erfindung geht von dem Aspekt aus, dass der Formgedächtniswerkstoff in einem austenitischen Zustand gefertigt wird und anschließend in eine martensitische Phase gekühlt wird, wobei hierdurch ein Phasenübergang stattfindet. In der martensitischen Phase wird der Formgedächtniswerkstoff durch Anwendung äußerer Kräfte verformt, so dass die Höhe des Formgedächtniswerkstoffes in einen Spalt zwischen dem ersten und dem zweiten Bauteil eingeschoben werden kann. Sobald der Formgedächtniswerkstoff in diesem Spalt angeordnet ist erfolgt eine Erwärmung des Formgedächtniswerkstoffes in den austenitischen Zustand. Durch den Formgedächtnis-Effekt versucht dieser Werkstoff seine im austenitischen Zustand gefertigte Form wieder anzunehmen, was dazu führt, dass eine Formänderung des Werkstoffes zu einer Druckausübung zwischen dem ersten und dem zweiten Bauteil entstehen lässt, was zu einer Kraft führt, die das erste Bauteil vom zweiten Bauteil wegdrückt. Mit entsprechenden Gegenkräften ist somit eine starre Verbindung zwischen dem ersten und dem zweiten Bauteil möglich. Die Anfälligkeit dieses Systems auf Schwingungen ist dadurch wirksam reduziert.

Vorteilhafterweise liegt der Formgedächtniswerkstoff in dem Ausgangszustand als Martensit bei statistischer Domänenverteilung vor.

In einer weiteren vorteilhaften Weiterbildung wird ein Formgedächtniswerkstoff verwendet, der bei einer Betriebstemperatur zwischen 80°C und 100°C, insbesondere bis zu 130°C, pseudoelastische Eigenschaften aufweist.

Erfindungsgemäß wird das erste Bauteil als Rotor mit einer Schaufelnut und das zweite Bauteil als Schaufel mit einem Schaufelfuß ausgebildet, wobei der Schaufelfuß in die Schaufelnut angeordnet wird, wobei zwischen dem Schaufelfuß und der Schaufelnut der Formgedächtniswerkstoff angeordnet wird.

In einer vorteilhaften Weiterbildung wird der Formgedächtniswerkstoff in einem zwischen dem Schaufelfuß und der Schaufelnut angeordneten Spalt angeordnet, wobei die Höhe des Spalts kleiner als die Höhe des im Ausgangszustand ausgebildeten Formgedächtniswerkstoffes ist. Der im abgekühlten martensitischen Zustand befindliche Formgedächtniswerkstoff wird derart bearbeitet, dass die Höhe des Formgedächtniswerkstoffes kleiner ist als die Höhe des Spaltes. Der im abgekühlten martensitischen Zustand befindliche Formgedächtniswerkstoff kann durch einen Walzprozess bearbeitet werden, wodurch die Form des Formgedächtniswerkstoffes verändert wird.

Statt des Walzprozesses könnte eine andere Möglichkeit gewählt werden, um den Formgedächtniswerkstoff in Form zu bringen. Der Formgedächtniswerkstoff könnte durch Pressen oder Ähnliches in Form gebracht werden.

In einer vorteilhaften Weiterbildung ist der Schaufelfuß als Tannenbaumschaufelfuß und die Schaufelnut als Tannenbaumnut mit korrespondiert ausgebildeten Tannenbaumnuten gefertigt. Die Anordnung des Schaufelfußes mit einem Tannenbaumschaufelfuß und einer entsprechenden Tannenbaumnut führt zu verschiedenen Tragflanken, die durch die durch den Formgedächtniswerkstoff ausgeübte Kraft aneinandergepresst sind. Dadurch ist ein starres Gebilde des Schaufelfußes in der Schaufelnut entstanden. Der Schaufelfuß kann auch in einer so genannten Schwalbenschwanz- oder Hammerkopfform ausgebildet sein.

In einer vorteilhaften Weiterbildung wird der Formgedächtniswerkstoff mit flüssigem Stickstoff gekühlt.

In einer vorteilhaften Weiterbildung wird der Formgedächtniswerkstoff nach dem Abkühlen auf Raumtemperatur erwärmt und anschließend bearbeitet.

Die Erfindung wird anhand eines Ausführungsbeispiels in den Figuren näher erläutert. Die Figuren sollen die Erfindung in schematischer Weise darstellen. Bauteile mit gleichen Bezugszeichen weisen im Regelfall die gleichen Funktionen auf. Es zeigen:
- Figur 1: eine perspektivische Ansicht eines Ausschnitts einer Schaufelfußnut;
- Figur 2: eine schematische Darstellung der pseudoelastischen Formänderung;
- Figur 3: eine schematische Darstellung des Ein-Weg-Effekts (Pseudoplastizität);
- Figur 4: eine schematische Darstellung des erfindungsgemäßen Einbaus des Formgedächtniswerkstoffes.

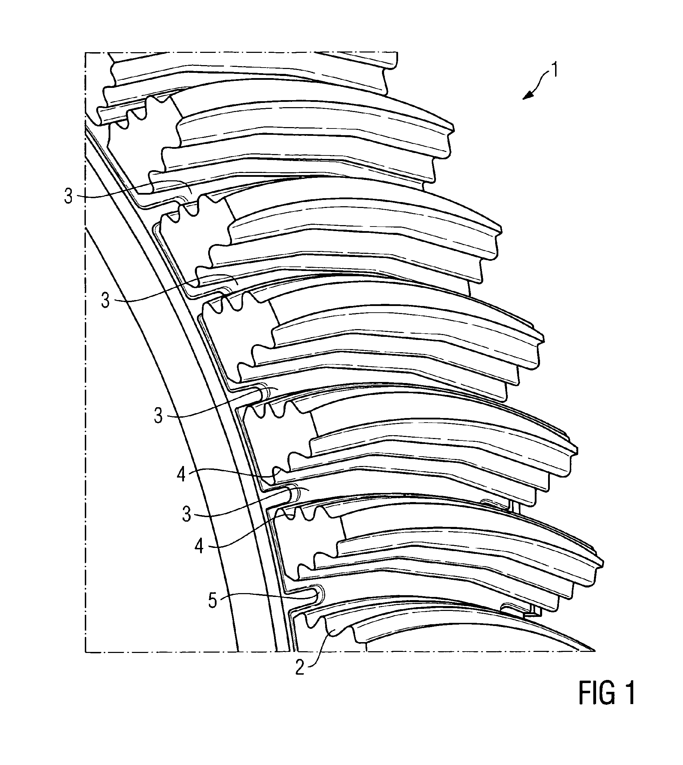

Die Figur 1 zeigt einen Ausschnitt eines Rotors 1 einer Strömungsmaschine, wie z. B. einer Dampfturbine. Der Rotor 1 weist auf seiner Rotoroberfläche eine als Tannenbaumfuß bezeichnete Tannenbaumnut 2 auf. Statt eines Tannenbaumfußes könnte ein Schwalbenschwanz- oder Hammerkopffuß eingesetzt werden. In diese Tannenbaumnut 2 werden nicht näher dargestellte Schaufelfüße mit entsprechend ausgebildeten Schaufelfüßen angeordnet, die zu der Tannenbaumnut 2 korrespondierende Tannenbaumschaufelfüße aufweisen. Im Betrieb rotiert der Rotor 1 um eine nicht näher dargestellte Rotationsachse. Die Schaufeln werden hierbei von einem Strömungsmedium umströmt. Die Bewegung des Rotors 1 mit samt der Schaufeln und der Umströmung mit dem Strömungsmedium führt zu Schwingungen der Turbinenschaufeln, die dazu führen, dass die Schwingungen in die Tannenbaumnuten 2 und den Schaufelfüßen übertragen werden. Im ungünstigen Fall können Risse in diesen Tannenbaumnuten 2 entstehen. Aber auch während eines An- und Abfahrens des Rotors 1 können große Schwingungen entstehen, die sich ungünstig auf die Lebensdauer auswirken. Maßnahmen, die die mechanische Schwingung von Schaufeln reduzieren sind daher Maßnahmen, die die Lebensdauer der Schaufeln verlängern. Das Risiko einer Rissbildung in einem hochbelasteten Bereich wird dadurch verringert. Neben der Verwendung von Deckplatten oder Snubbern bzw. dem Einsatz von Dämpferdrähten wird nun erfindungsgemäß zwischen der Tannenbaumnut und dem Schaufelfuß ein Formgedächtniswerkstoff (FGW) angeordnet. Der Formgedächtniswerkstoff (FGW) wird hierbei zwischen dem als erstes Bauteil ausgebildeten Rotor 1 und dem als zweites Bauteil ausgebildeten Schaufel angeordnet. Der Formgedächtniswerkstoff (FGW) wird hierbei beispielsweise in eine Schaufelfußunterseite 3 angeordnet. Zwischen der Schaufelfußunterseite 3 und der nicht näher dargestellten Turbinenschaufel ist ein Spalt, in dem der Formgedächtniswerkstoff (FGW) angeordnet wird. Hierbei wird der in einem Ausgangszustand vorliegende Formgedächtniswerkstoff (FGW) zunächst in einen martensitischen Zustand abgekühlt und mechanisch verformt. Der in dem Verformungszustand befindliche Formgedächtniswerkstoff (FGW) wird zwischen dem ersten und dem zweiten Bauteil eingebaut und anschließend in einen austenitischen Zustand umgewandelt. Die Umwandlung in den austenitischen Zustand erfolgt durch Erwärmung. Durch die Umwandlung in den austenitischen Zustand nimmt der Formgedächtniswerkstoff (FGW) seine im Ausgangszustand befindliche Form wieder an. Das bedeutet, dass wenn der Spalt zwischen der Schaufelfußunterseite 3 und dem Schaufelfuß eine entsprechende Größe aufweist, d. h. kleiner ist als der Formgedächtniswerkstoff (FGW) in seinem Ausgangszustand, führt das dann nach der Erwärmung zu einer Kraft von dem Formgedächtniswerkstoff auf den Schaufelfuß bzw. dem zweiten Bauteil. Das bedeutet, dass eine Kraft im Wesentlichen in radialer Richtung, die im Wesentlichen senkrecht zur Rotationsachse liegt, ausgeübt wird. Der Schaufelfuß wird dadurch an die entsprechenden Tragflanken 4 gedrückt, was zu einer starren Verbindung zwischen dem ersten Bauteil und dem zweiten Bauteil führt, das nunmehr geringere Schwingungen ausführen kann. In der Figur 1 sind lediglich zwei Tragflanken 4 mit dem Bezugszeichen 4 versehen.

Die Tannenbaumnut 2 weist eine Nut 5 für den Formgedächtniswerkstoff (FGW) auf.

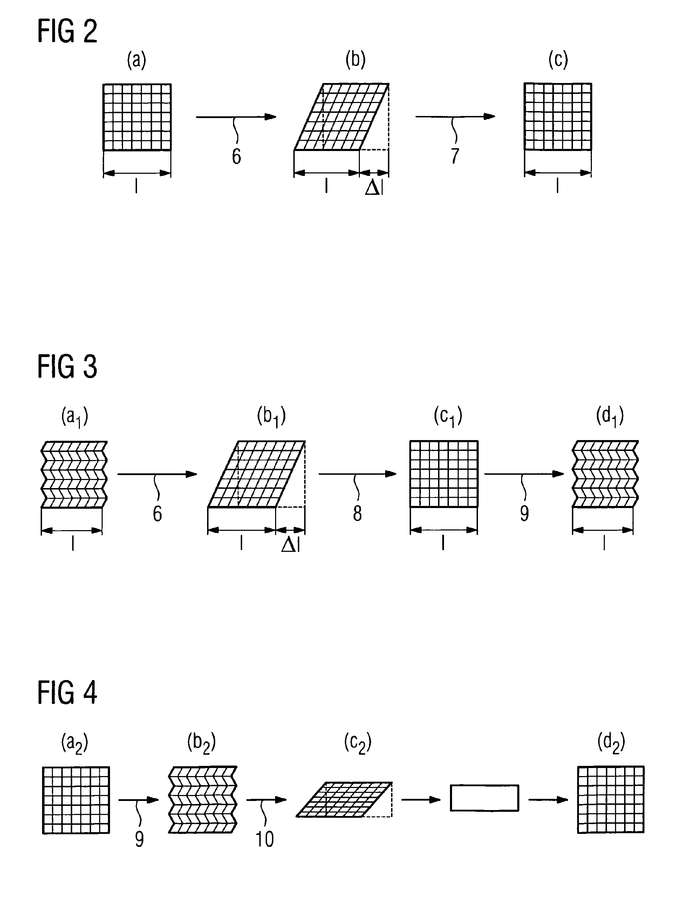

Figur 2 zeigt eine schematische Darstellung der pseudoelastischen Eigenschaften eines Formgedächtniswerkstoffes (FGW). Ein im austenitischen Zustand befindlicher Formgedächtniswerkstoff wird durch eine äußere mechanische Belastung 6 verformt. Dieser Verformungszustand kann durch eine mechanische Entlastung 7 wieder in seine ursprüngliche Form (c) umgewandelt werden.

Die Figur 3 zeigt in schematischer Weise den Ein-Weg-Effekt (Pseudoplastizität).

Dieser Effekt tritt unterhalb einer Temperatur M_{f} auf, also im martensitischen Zustand. Der als Martensit vorliegende Formgedächtniswerkstoff liegt in einem Ausgangszustand a₁ vor, der in Folge einer äußeren Belastung 6 verformt wird und in einem Verformungszustand (b) anschließend vorliegt. Durch Erwärmung 8 erfolgt eine Phasenumwandlung wieder in die ursprüngliche Form (c). Der Ausgangszustand a₁wird durch eine Abkühlung 9 erreicht. Der Formgedächtniswerkstoff liegt dann wieder in einem martensitischen Ausgangszustand d₁ vor.

Die Figur zeigt in schematischer Weise den Einbau des Formgedächtniswerkstoffes zwischen dem ersten Bauteil 1 und dem zweiten Bauteil. Der Formgedächtniswerkstoff sollte in seinem Ausgangszustand a₂ eine etwas größere Ausdehnung in radialer Richtung (bezogen auf den Rotor, Dickenrichtung des Formgedächtniswerkstoffes) besitzen als der Spalt zwischen der Tannenbaumnut 2 und dem Schaufelfuß im eingebauten Zustand. Dadurch wird während des Betriebes unter Einwirkung der Fliehkraft die Schaufel fest in die Nut gepresst und somit auftretende Schwingungen optimal gedämpft. Damit der Einbau möglich ist, wird der Formgedächtniswerkstoff zunächst in einem austenitischen Zustand a₂ gefertigt. Der Formgedächtniswerkstoff hat in diesem Zustand die gewünschten Abmessungen. Anschließend wird der Formgedächtniswerkstoff durch Kühlung in eine martensitische Phase b₂ verändert. In diesem veränderten Zustand b₂ wird der Formgedächtniswerkstoff beispielsweise durch Walzen mechanisch verformt. Dadurch entsteht eine abgeflachte Form c₂. Die Verformung erfolgt derart, dass nunmehr ein problemloser Einbau des Formgedächtniswerkstoffes zwischen der Schaufel und der Tannenbaumnut 2 möglich ist. Nach dem Einbau der Schaufel wird der Formgedächtniswerkstoff auf eine Temperatur oberhalb einer Umwandlungstemperatur erwärmt. Dies kann idealerweise auch über eine ausreichend hohe Betriebstemperatur geschehen. Somit wird der Formgedächtniswerkstoff wieder in den austenitischen Zustand d₂ gebracht. In diesem Zustand d₂ versucht der Formgedächtniswerkstoff wieder seine Ausgangsform a₂ anzunehmen. Das dadurch erfolgte Ausdehnen drückt gegen den Schaufelfuß und dadurch auf die Tragflanken 4, wodurch eine Verfestigung der Schaufel in der Tannenbaumnut 2 die Folge ist. Das Material des Formgedächtniswerkstoffes sollte so gewählt sein, dass es bei der Betriebstemperatur thermodynamisch stabil im austenitischen Zustand ist. Die optimale Pseudoelastizität wird erreicht, wenn die Betriebstemperatur nicht zu weit von der Umwandlungstemperatur des Formgedächtniswerkstoffes liegt.

Erfindungsgemäß wird eine Formgedächtnis-Legierung verwendet, deren Umwandlungstemperatur auf dem Heizpfad bei z. B. 40°C liegt. Dies kann dadurch erreicht werden, dass der Nickelgehalt der Formgedächtnis-Legierung zwischen 50,5 Gew.-% und 50,6 Gew.-% in der Matrix ist. Diese Nickelgehalteinstellung kann über eine geeignete Wärmebehandlung erreicht werden. Die Materialeigenschaften sollten derart gewählt werden, dass eine gute pseudoelastische Eigenschaft bei einer gegebenen Betriebstemperatur ist, die hier zwischen 80°C und 100°C, insbesondere bis zu 130°C sein kann. Die Einsatztemperatur sollte daher in nicht zu weiter Entfernung zu der Umwandlungstemperatur liegen, die bei ca. 50°C liegt.

Die Einsatztemperatur des pseudoelastischen Werkstoffs sollte etwa 20°C bis 40°C oberhalb der Umwandlungstemperatur in den austenitischen Zustand liegen.

Der Formgedächtniswerkstoff kann beispielsweise in flüssigen Stickstoff getaucht werden und vollständig in eine martensitische Phase überführt werden und anschließend wieder langsam auf Raumtemperatur erwärmt werden. Der martensitische Zustand bleibt hierbei erhalten. Anschließend kann der martensitische Formgedächtniswerkstoff nun in eine Form gebracht werden, z. B. durch einen Walzprozess. Anschließend wird der Formgedächtniswerkstoff in die Nut 5 eingelegt und anschließend erfolgt der Einbau der Schaufeln. Durch eine Temperaturerhöhung, bei der die Umwandlungstemperatur um z. B. 40°C überschritten wird, wandelt der Formgedächtniswerkstoff in den austenitischen Zustand um, wobei er sich an seine ursprüngliche Form, in der er gefertigt wurde, "erinnert". Eine feste Passung des Formgedächtniswerkstoffes zwischen dem Schaufelfuß und der Tannenbaumnut ist dadurch gewährleistet.

## Patentansprüche

1. Verfahren zur Reduzierung von Schwingungen in einem ersten Bauteil und einem zweiten Bauteil,
wobei zwischen dem ersten und dem zweiten Bauteil ein Formgedächtniswerkstoff (FGW) angeordnet wird,
wobei der in einem Ausgangszustand vorliegende Formgedächtniswerkstoff in einen martensitischen Zustand abgekühlt und verformt wird,
wobei der verformte Formgedächtniswerkstoff (FGW) zwischen dem ersten und dem zweiten Bauteil eingebaut wird und anschließend der Formgedächtniswerkstoff in einen austenitischen Zustand umgewandelt wird.

2. Verfahren nach Anspruch 1,
wobei die Umwandlung in den austenitischen Zustand durch Erwärmung erfolgt.

3. Verfahren nach Anspruch 1 oder 2,
wobei der in dem Ausgangszustand vorliegende Formgedächtniswerkstoff als Austenit gefertigt wird.

4. Verfahren nach Anspruch 1 oder 2,
wobei der in dem Ausgangszustand vorliegende Formgedächtniswerkstoff als Martensit bei statistischer Domänenverteilung gefertigt wird.

5. Verfahren nach einem der vorhergehenden Ansprüche,
wobei ein Formgedächtniswerkstoff verwendet wird, der bei einer Betriebstemperatur zwischen 80°C und 100°C pseudoelastische Eigenschaften aufweist.

6. Verfahren nach einem der vorhergehenden Ansprüche,
wobei ein Formgedächtniswerkstoff aus einer NiTi-Legierung mit einem Ni-Gehalt zwischen 50,4at% und 50,7at% (entspricht einem Nickelgehalt zwischen 55,5 Gew.-% Ni und 55,61 Gew.-% Ni),
insbesondere 50,5at% und 50,6at% verwendet wird.

7. Verfahren nach einem der vorhergehenden Ansprüche,
wobei das erste Bauteil als Rotor (1) mit einer Schaufelnut (5) und das zweite Bauteil mit einem Schaufelfuß ausgebildet wird,
wobei der Schaufelfuß in der Schaufelnut (5) angeordnet wird,
wobei zwischen dem Schaufelfuß und der Schaufelnut (5) der Formgedächtniswerkstoff angeordnet wird.

8. Verfahren nach Anspruch 7,
wobei der Formgedächtniswerkstoff in einem zwischen dem Schaufelfuß und der Schaufelnut (5) angeordneten Spalt angeordnet wird,
wobei die Höhe des Spalts kleiner als die Höhe des im Ausgangszustand ausgebildeten Formgedächtniswerkstoffes ist.

9. Verfahren nach Anspruch 8,
wobei der im abgekühlten martensitischen Zustand befindliche Formgedächtniswerkstoff derart bearbeitet wird, dass die Höhe des Formgedächtniswerkstoffes kleiner ist als die Höhe des Spaltes.

10. Verfahren nach Anspruch 9,
wobei der im abgekühlten martensitischen Zustand befindliche Formgedächtniswerkstoff mit einem Walzprozess bearbeitet wird.

11. Verfahren nach einem der Ansprüche 7 bis 10,
wobei der Schaufelfuß als Tannenbaumschaufelfuß und die Schaufelnut als Tannenbaumnut ausgebildet wird.

12. Verfahren nach einem der vorhergehenden Ansprüche,
wobei der Formgedächtniswerkstoff mit flüssigem Stickstoff gekühlt wird.

13. Verfahren nach einem der vorhergehenden Ansprüche,
wobei der Formgedächtniswerkstoff nach dem Abkühlen auf Raumtemperatur erwärmt wird und anschließend bearbeitet wird.

14. Verfahren nach einem der vorhergehenden Ansprüche,
wobei die chemische Zusammensetzung des Formgedächtniswerkstoffes derart gewählt wird, dass die Umwandlungstemperatur zu dem austenitischen Zustand über 40°C liegt.

15. Vorrichtung mit einem ersten und einem zweiten Bauteil,
wobei zwischen dem ersten und dem zweiten Bauteil ein Formgedächtniswerkstoff gemäß einem Verfahren nach einem der Ansprüche 1 bis 14 eingebaut ist.

16. Vorrichtung nach Anspruch 15,
wobei der Formgedächtniswerkstoff eine NiTi-Legierung ist.

17. Vorrichtung nach Anspruch 16,
wobei der Nickelgehalt zwischen 50,4at% und 50,7at%, insbesondere zwischen 50,5at% und 50,6at% liegt.
